# EUROPEAN PATENT APPLICATION

(11) **EP 1 662 476 A2**
(43) Date of publication of application: **31.05.2006**
(21) Application number: 05257313.6
(22) Date of filing: 28.11.2005
(51) Int. Cl.: G09G 5/00

(54) **Video device capable of downloading data and method of controlling the same**

(30) Priority: 29.11.2004 KR 2004098394; 10.12.2004 KR 2004104094; 20.05.2005 KR 2005042526
(71) Applicant: LG Electronics Inc., Yongdungpo-gu Seoul (KR)
(72) Inventor: Jo, Su Deok, Buk-gu Daegu (KR); Kim, Jong Hyun, Sasang-gu Busan (KR); Kim, Byun Gon, Buk-gu Daegu (KR); Sin, Geun Sub, Dalseo-gu Daegu (KR)
(74) Representative: Fennell, Gareth Charles

(57) **Abstract**

Disclosed herein are a video device capable of downloading data and a method for controlling the same. The video device includes a data receiving unit for receiving a data signal containing data associated with operation of the video device, a memory for storing the data included in the data signal, and a controller for automatically updating the video device according to the data stored in the memory.

## Description

The present invention relates to a video device and a method for controlling the same, and more particularly, to a video device capable of downloading data and a method for controlling the same, wherein one or more video devices including the video device can receive software associated with systems thereof or data about set environments thereof via a cable or in the form of an infrared signal.

Nowadays, with the development of digital multimedia technologies and information technologies, digital televisions capable of receiving and displaying digital broadcast signals are commercially available.

Digital broadcasting provides one hundred or more channels, so that the user can select and watch various channels.

Particularly, a digital television that receives and displays a digital broadcast signal provides a variety of additional functions, as well as the broadcast signal reception.

For example, the digital television may provide an on-screen display function for enabling the user to select a desired one of various menus. In addition, the digital television may provide functions unrelated to broadcast watching, such as a game, an electronic picture frame, etc.

Meanwhile, new additional functions applicable to the digital television have been developed, and improved versions of conventional functions have been provided.

In this connection, there is a need to apply newly developed or improved functions to previously sold televisions.

However, conventionally, there is no method for upgrading previously sold televisions with new functions.

On the other hand, a remote controller can be used to remotely control the operation of a video device such as a plasma display panel (PDP), a liquid crystal display (LCD), or the like. For example, the remote controller may remotely control external input selection, channel selection, screen adjustment (contrast, brightness, sharpness, tint, color depth or noise filter adjustment), audio adjustment (sound effect setting), etc.

In the case where a plurality of video devices are used in a large-scale lodging house such as a hotel, or a public place such as an exhibit hall, a plurality of users may control and change video and audio set states of the video devices at their discretions using remote controllers. In this case, it is necessary to reset the changed video and audio set states to desired regular states.

For example, in a hotel, it is necessary to initialize video and audio set states of a video device installed in each room to desired regular states after each room user checks out.

Similarly, in an exhibit hall, it is necessary to initialize video and audio set states of a plurality of video devices installed in the exhibit hall to regular states suitable for an exhibit concept before the exhibit hall is opened.

However, conventionally, in order to adjust a plurality of video devices to the same set states, the user must accurately memorize the set states and separately input the set states to each of the video devices.

For example, in the case where the user does not accurately memorize the set states or inputs different setting values by mistake, the user may fail to adjust the video devices to the same set states and to know even whether the video devices have been adjusted to the same set states.

Accordingly, the present invention relates to a video device capable of downloading data thereabout and a method for controlling the same that substantially obviate one or more problems due to limitations and disadvantages of the related art.

Various aspects of the invention are set out in the accompanying independent claims.

Embodiments can provide a video device capable of downloading data thereabout and a method for controlling the same, wherein software contained in the video device can be upgraded or new software can be added to the video device.

Embodiments can provide a video device capable of downloading data thereabout and a method for controlling the same, wherein a time required for a process of upgrading a plurality of video devices including the video device with the same software can be reduced and the process can be simplified.

Embodiments can provide a video device capable of downloading data thereabout and a method for controlling the same, wherein video and audio setting information preset in a specific one of a plurality of video devices including the video device can be similarly set in the other video devices.

Embodiments of the invention will now be described, by way of example only, with reference to the accompanying drawings. In the drawings:
FIG. 1 is a block diagram showing the configuration of a system including a video device capable of downloading data thereabout, according to a first embodiment of the present invention;
FIG. 2 is a block diagram showing the configuration of the video device in FIG. 1;
FIG. 3 is a flow chart illustrating a method for controlling the video device capable of downloading the data thereabout, according to the first embodiment of the present invention;
FIG. 4 is a view showing the structure of a transport stream packet according to the present invention;
FIG. 5 is a block diagram showing the configuration of a system including a video device capable of downloading data thereabout, according to a second embodiment of the present invention;
FIG. 6 is a block diagram showing the configuration of the video device in FIG. 5;
FIG. 7 is a block diagram of a remote controller for the video device in FIG. 5;
FIG. 8 is a flow chart illustrating a method for controlling the video device capable of downloading the data thereabout, according to the second embodiment of the present invention;
FIG. 9 is a block diagram showing the configuration of a system including a video device capable of downloading data thereabout, according to a third embodiment of the present invention;
FIG. 10 is a block diagram of a wireless setting device in FIG. 9;
FIG. 11 is a view showing an outer appearance of the wireless setting device in FIG. 9;
FIG. 12 is a block diagram showing the configuration of the video device in FIG. 9;
FIG. 13A is a view showing the format of a start pulse indicative of the start of transmission of setting information by a transmitter in FIG. 10;
FIG. 13B is a timing diagram of the start pulse of FIG. 13A;
FIG. 13C is a view showing the format of a data pulse of the setting information which is transmitted from the transmitter in FIG. 10;
FIG. 13D is a view illustrating repetition of packet data which is transmitted from the transmitter in FIG. 10;
FIG. 13E is a timing diagram illustrating a time interval between the packet data which is transmitted from the transmitter in FIG. 10; and
FIG. 14 is a flow chart illustrating a method for controlling the video device capable of downloading the data thereabout, according to the third embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

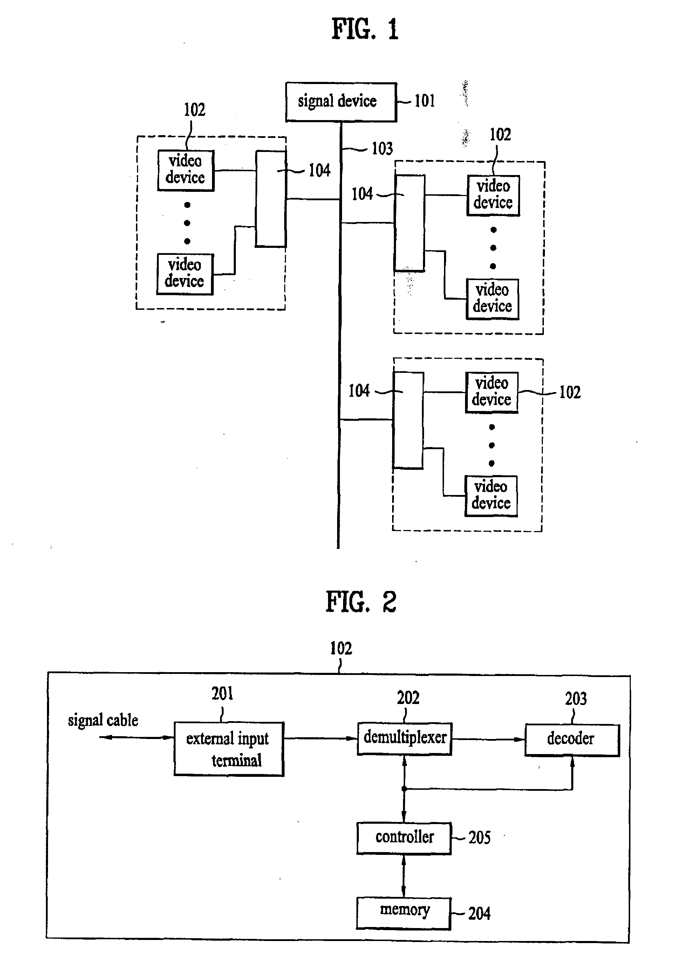

A description will hereinafter be given of the system including the video device capable of downloading the data thereabout, according to the first embodiment of the present invention, with reference to FIGs. 1 and 2.

It should be noted here that the data about the video device contains one or more of software associated with a system of the video device or video/audio setting information.

The system according to the present embodiment comprises, as shown in FIG. 1, the video device, denoted by reference numeral 102, a signal device 101 for generating the data about the video device 102, a signal cable 103, and a cable terminal 104.

The video device 102 may be, for example, a television, and the configuration thereof will hereinafter be described with reference to FIG. 2.

The video device 102 includes an external input terminal 201, a demultiplexer 202, a decoder 203, a controller 205, and a memory 204.

The external input terminal 201 is connected to the cable terminal 104, which is in turn connected to the signal cable 103, to receive a digital broadcast signal, or transport stream packet, transmitted from the signal device 101.

The demultiplexer 202 functions to demultiplex the transport stream packet received through the external input terminal 201.

The decoder 203 acts to decode the transport stream packet demultiplexed by the demultiplexer 202.

The memory 204 acts to store various software.

The controller 205 functions to compare a packet identifier (PID) information contained in the decoded transport stream packet with pre-stored model information and store software contained in the transport stream packet in the memory 204 when the PID information is the same as the pre-stored model information.

An operating program of the controller 205 may be configured in such a manner that the controller 205 can recognize a remote controller key input from the user corresponding to a software upgrade command and automatically switch the video device 102 to a channel over which a signal containing software is transmitted.

The signal device 101 is adapted to generate the transport stream packet containing the software and broadcast it using the cable 103. The signal device 101 may be digital broadcasting equipment installed in a factory where the video device is produced, or broadcasting equipment for in-company broadcasting or product testing in the factory. Alternatively, the signal device 101 may be a specific video device or computer.

The signal cable 103 is branched off from the signal device 101 and then connected to each cable terminal 104 in the factor where the video device is produced.

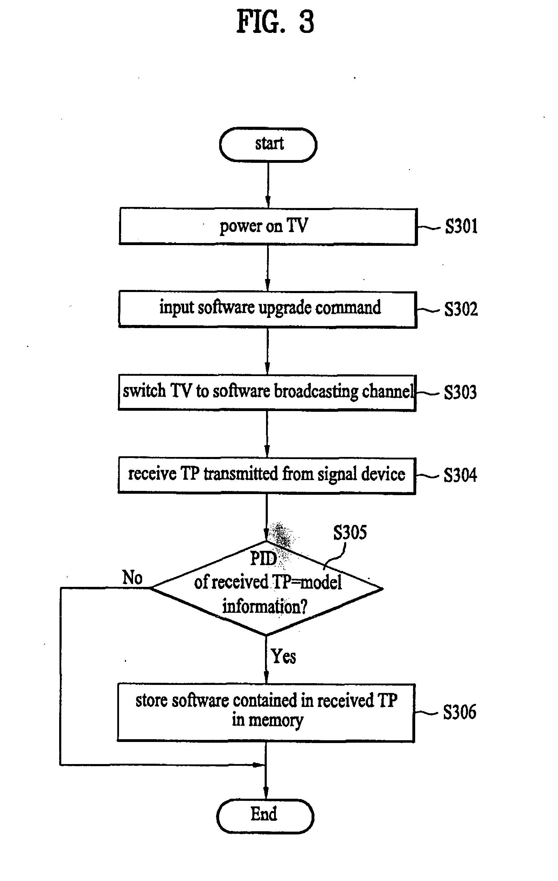

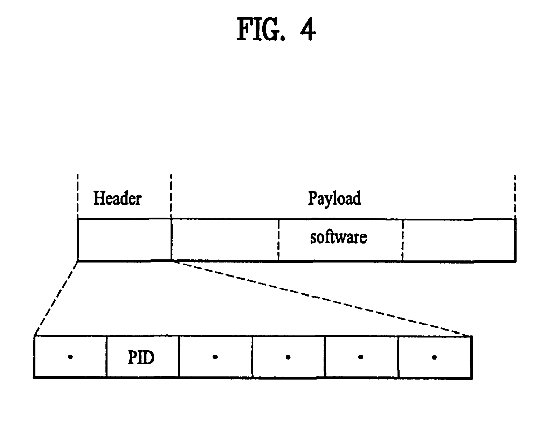

The data downloading operation of the video device according to the first embodiment of the present invention will hereinafter be described with reference to FIGs. 3 and 4.

The user powers on the video device 102 (S301), and then inputs a command to upgrade software of the video device 102, to the video device 102 through the use of, for example, a remote controller (S302).

The software upgrade command may be inputted through a dedicated key button or a combination of existing key buttons.

Subsequently, the controller 205 of the video device 102 recognizes the inputted software upgrade command and switches the video device 102 from a currently tuned channel to a channel over which the software of the video device 102 is broadcast (S303).

Meanwhile, the signal device 101 generates a transport stream packet containing software to be used for upgrade of a specific model, and broadcasts the generated transport stream packet through the signal cable 103.

The transport stream packet has a structure as shown in FIG. 4. That is, the packet is basically composed of a header and a payload, in the same format as that in digital broadcasting. The payload contains the software required for the upgrade of the video device. The header contains a packet ID (PID), which is used for identification of the model of the video device.

That is, the packet ID is generated in such a way that some or all thereof is the same as model information of the video device, and then contained in the packet, so that it can be used as a reference for identification of the model of the video device at the receiving side. Notably, provided that the entire packet ID is set to be the same as the model information of the video device, it will also be necessary to store the model information of the video device in the same format as the packet ID.

The software is contained in at least one or two of a video area, audio area and additional information area of the payload. In the present invention, because the packet is used to transmit the software associated with the video device, all of the video area, audio area and additional information area of the payload may be used to contain the software. It is also possible to include different types of software in respective packets at a regular time interval.

The video device 102 receives the transport stream packet broadcast over the software broadcasting channel, or channel corresponding to the signal cable 103 connected to the signal device 101, through the external input terminal 201 connected to the cable terminal 104 (S304).

Then, in the video device 102, under the control of the controller 205, the demultiplexer 202 demultiplexes the received transport stream packet and the decoder 203 decodes the demultiplexed transport stream packet. Then, the controller 205 extracts the packet ID (PID) from the decoded transport packet stream and determines whether the extracted PID is the same as the pre-stored model information (S305).

That is, the controller 205 determines whether the packet ID contains the same data as the pre-stored model information. Alternatively, the controller 205 may determine whether the entire packet ID is the same as the model information, as stated previously.

Upon determining at step S305 that the packet ID is the same as the model information, the controller 205 stores the software contained in the received transport stream packet in the memory 204, thus completing the software upgrade (S306).

At this time, at least one or two of the video area, audio area and additional information area of the payload are determined and the software associated with the video device 102 is contained in the determined areas, as stated previously. The operating program of the controller 205 of the video device 102 is configured in such a way that the controller 205 can read the software associated with the video device 102 from the corresponding areas.

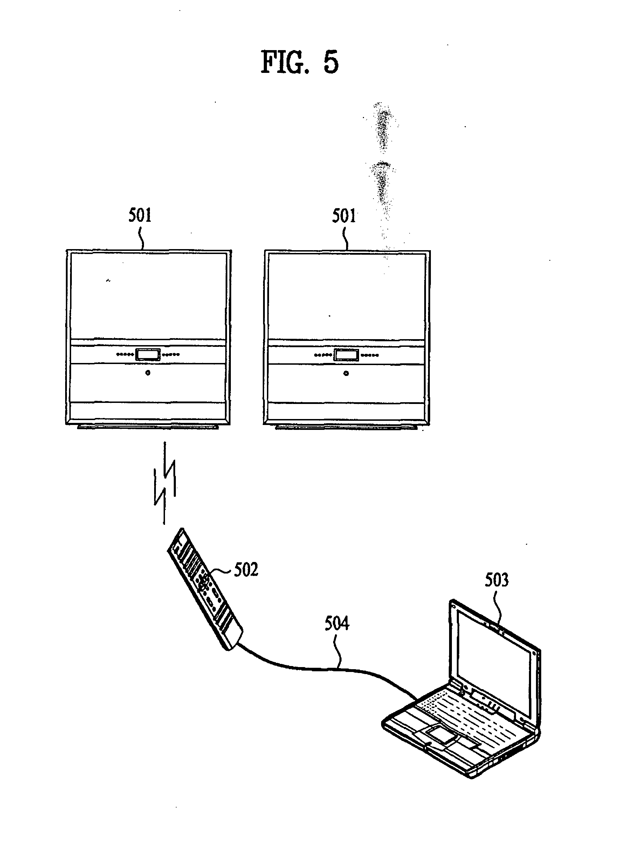

FIG. 5 is a block diagram showing the configuration of a system including a video device capable of downloading data thereabout, according to a second embodiment of the present invention.

Note that the data about the video device contains one or more of software associated with a system of the video device or video/audio setting information.

In the system of FIG. 5, the video device is adapted to download the software associated therewith using an infrared signal, as will hereinafter be described with reference to FIG. 5.

In other words, the video device in FIG. 5 is adapted to download the software associated therewith using the infrared signal, whereas the video device in FIG. 1 is adapted to download the software associated therewith using the cable.

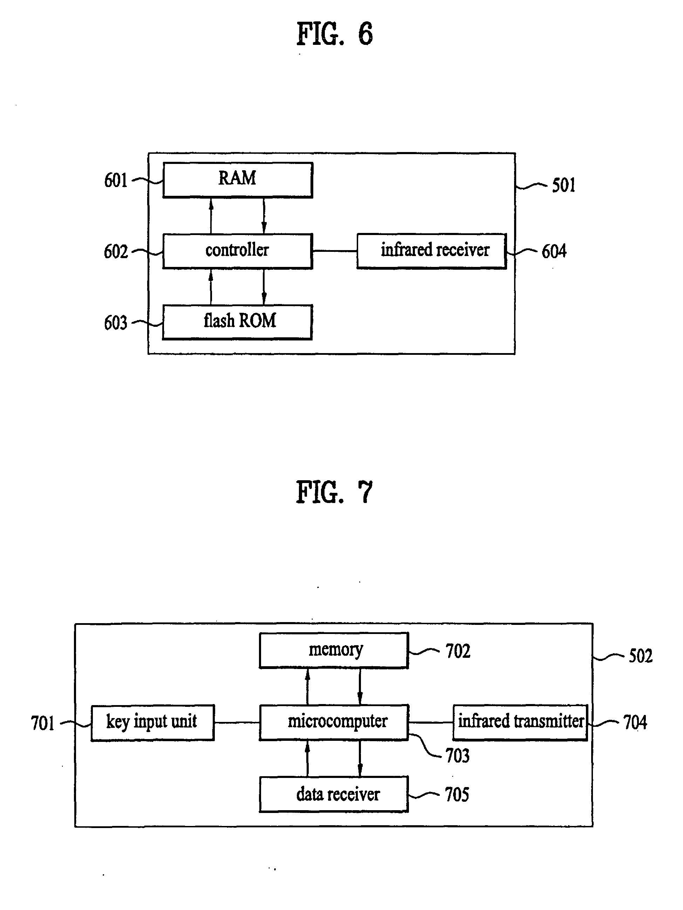

As shown in FIG. 5, the system according to the second embodiment of the present invention comprises the video device, denoted by reference numeral 501, a remote controller 502, a cable 504, and a computer 503. In particular, the video device 501 includes an infrared receiver 604 (see FIG. 6) for receiving the software associated with the video device 501.

In general, the video device is controlled through the use of the remote controller and, to this end, it has the infrared receiver. The software associated with the video device can be received through the infrared receiver in a pulse code modulation (PCM) manner.

The software associated with the video device 501 can be provided over the Internet or through a storage medium, and can be inputted to the video device 501 through the remote controller 502, which is connected with the computer 503 via the cable 504.

For example, the remote controller 502 and the computer 503 may be interconnected through a universal serial bus (USB) port.

The remote controller 502 functions as a PCM modulator. That is, the remote controller 502 modulates the software associated with the video device 501, inputted thereto, in the PCM manner to transmit it in the form of an infrared signal.

Therefore, the software associated with the video device 501 is transmitted to the video device 501 through the remote controller 502, and the video device 501 receives the transmitted software. As a result, the video device 501 can newly add the received software to existing software, or upgrade the existing software with the received software.

Although the remote controller 502 has been disclosed in this embodiment to transmit the software, the present invention is not limited thereto. For example, any infrared transmitter (e.g., a PCM modulator) is applicable to the present invention as long as it can transmit an input signal in the form of infrared rays.

The configuration of the video device shown in FIG. 5 will hereinafter be described in detail with reference to FIG. 6.

The video device 501 according to this embodiment may include the basic structure of a general video device. For example, the video device 501 may include a tuner for receiving a broadcast signal, a screen or panel for displaying a picture, means for generating a video image, and various signal processing means.

It will be understood here that only the configuration of the video device directly concerned in the present invention is mainly shown in FIG. 6.

As stated above, the software associated with the video device 501, transmitted through the remote controller 502, is inputted to the video device 501 through the infrared receiver 604.

The software associated with the video device 501, inputted through the infrared receiver 604, is temporarily stored in a random access memory (RAM) 601 and then decoded and decompressed, under control of a controller 602.

The software associated with the video device 501 is also stored in a flash read only memory (ROM) 603 so that existing data in the flash ROM 603 can be updated with the stored software.

In this manner, the video device 501 according to the present embodiment can receive the software associated therewith through the infrared receiver 604 and update the existing software thereof with the received software.

The configuration of the remote controller for the video device according to this embodiment will hereinafter be described in detail with reference to FIG. 7.

The remote controller 502 includes, as shown in FIG. 7, a key input unit 701, a microcomputer 703, a memory 702, a data receiver 705, and an infrared transmitter 704.

The key input unit 701 includes a plurality of key buttons for controlling various functions of the video device 501. The key input unit 701 further includes a key button for transmitting the software associated with the video device 501.

The data receiver 705 is connected with an external storage medium via a memory card slot or USB port to receive the software associated with the video device 501 therefrom.

The memory 702 acts to store an operating program of the remote controller 502 or key code data. The memory 702 may temporarily store the received software.

The microcomputer 703 is adapted to modulate and transmit the stored or received software associated with the video device 501 in the PCM manner in response to the user's key input.

The infrared transmitter 704 functions to convert the software associated with the video device 501 or the key code data, stored in the memory 702, into an infrared signal and transmit the converted infrared signal to the video device 501.

With this configuration, the remote controller 502 can receive the software associated with the video device 501, convert the received software into an infrared signal and transmit the converted infrared signal, and the video device 501 can receive the transmitted infrared signal, decode it into the original software and update existing software stored therein with the decoded software.

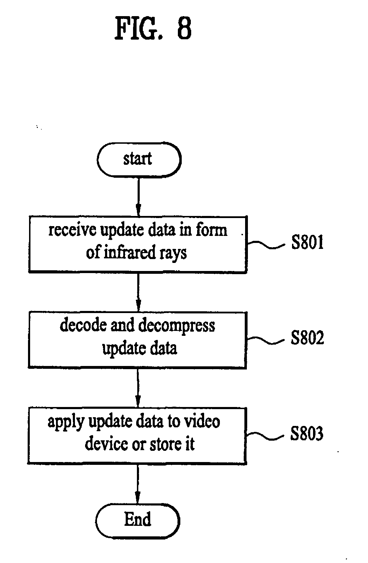

The operation of the video device of receiving the software associated therewith according to the second embodiment of the present invention will hereinafter be described with reference to FIG. 8.

First, the video device 501 receives the software associated therewith in the form of infrared rays through the infrared receiver 604 (S801).

The received software is temporarily stored in the RAM 601 and then decoded and decompressed under the control of the controller 602 (S802).

Then, the software associated with the video device 501 is applied to the system of the video device 501 or stored in the flash ROM 603 under the control of the controller 602 (S803).

As described above, according to the second embodiment of the present invention, the video device- associated software stored in the external storage medium is transmitted to the video device through the use of the remote controller, thereby making it possible to readily update the existing software of the video device.

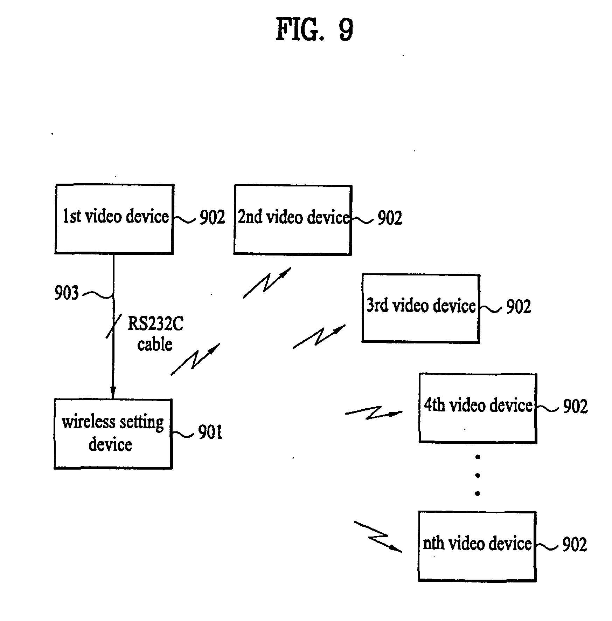

FIG. 9 is a block diagram showing the configuration of a system including a video device capable of downloading data thereabout, according to a third embodiment of the present invention.

Note that the data about the video device contains one or more of software associated with a system of the video device or video/audio setting information.

In the system of FIG. 9, the data about the video device (for example, the audio/video setting information of the video device) can be received by a different video device, as will hereinafter be described with reference to FIG. 9.

As shown in FIG. 9, the system according to the third embodiment of the present invention comprises a plurality of video devices 902, and a wireless setting device 901. A specific one of the video devices 902 is adapted to preset video and audio states thereof to states desired by the user and generate the resulting video/audio setting information. The wireless setting device 901 is connected with the specific video device 902 to receive the video/audio setting information from the specific video device 902 and wirelessly transmit it to the other video devices 902. The other video devices 902 are adapted to receive the video/audio setting information from the wireless setting device 901 and set video and audio states thereof based on the received setting information such that the video and audio states thereof are the same as those of the specific video device 902.

Each of the video devices 902 and the wireless setting device 901 are connected with each other wirelessly or by wire. For connection by wire, each of the video devices 902 and the wireless setting device 901 may be interconnected via an RS232C cable 903.

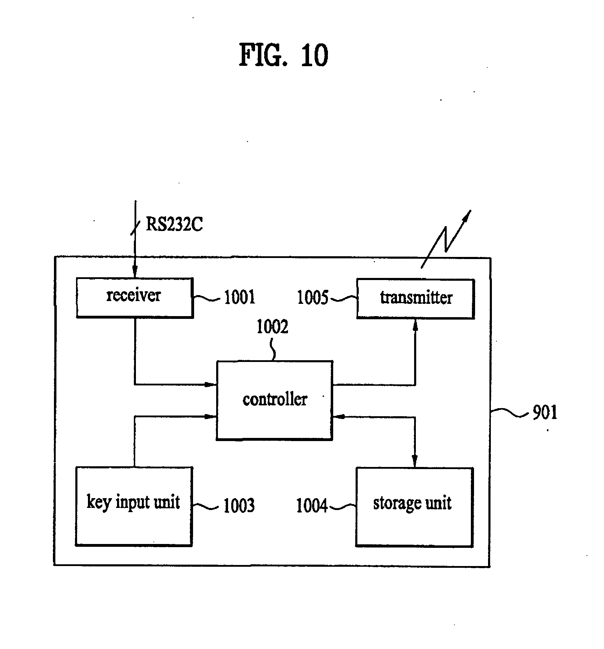

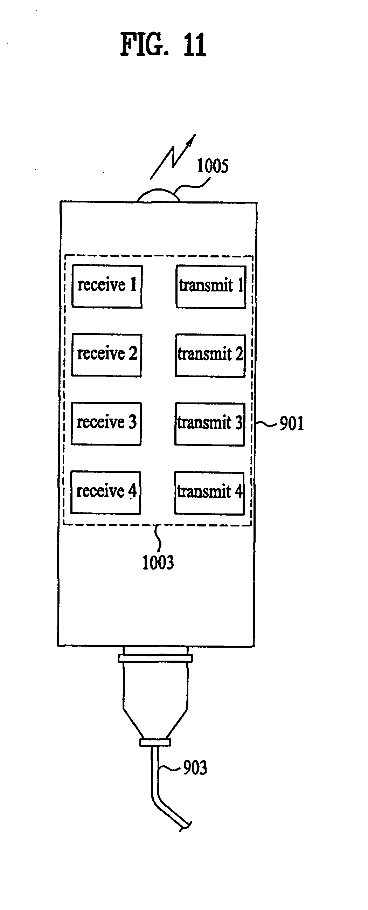

The operations of the wireless setting device 901 and video devices 902 will hereinafter be described in detail with reference to FIGs. 10 to 12.

The wireless setting device 901 includes, as shown in FIG. 10, a receiver 1001 connected with the specific video device 902 via, for example, the RS232C cable 903, and a controller 1002 for receiving data about the specific video device 902 from the receiver 1001, storing the received data in a storage unit 1004, reading and modulating the stored data and outputting the modulated data to a transmitter 1005. The transmitter 1005 acts to transmit the modulated data from the controller 1002 to the other video devices 902 in the form of an infrared signal. The wireless setting device 901 further includes a key input unit 1003 for applying key signals corresponding to Store and Transmit key inputs from the user to the controller 1002.

The data about the specific video device 902 contains setting information regarding a set state of the specific video device 902. For example, the data about the specific video device 902 may contain screen adjustment information (e.g., setting information associated with contrast, brightness, sharpness, tint, color, noise filter, etc.), audio adjustment information (e.g., setting information associated with stereo sound, surround sound, etc.), channel selection information, external input selection information, and so forth.

First, in one arbitrary video device, the external input selection information, channel selection information, screen adjustment information and audio adjustment information may be set to desired regular states.

Thereafter, the states of one or more different video devices may be required to be similarly set to the desired regular states. For example, in the case where a plurality of video devices are on the same test or constitute a multivision in a specific factory, or are present in a lodging house or public place, the states thereof must be set to the same states.

In this case, if a Receive key of the key input unit 1003 is inputted, the controller 1002 receives the setting information of the specific video device 902, connected therewith via the RS232C cable 903, through the receiver 1001 and stores the received setting information in the storage unit 1004.

Then, the controller 1002 separates the received setting information of the specific video device 902 into a plurality of different setting information, for example, four different setting information corresponding respectively to keys 'Receive 1', 'Receive 2', 'Receive 3' and 'Receive 4', and separately stores the separated setting information in the storage unit 1004.

As an alternative, whenever the video device 902 is changed, a different one of the keys 'Receive 1', 'Receive 2', 'Receive 3' and 'Receive 4' may be inputted, and setting information of four video devices may thus be separately stored in the storage unit 1004.

After the storage of the setting information is completed, if the user inputs any one of keys 'Transmit 1', 'Transmit 2', 'Transmit 3' and 'Transmit 4' of the key input unit 1003 corresponding to a destination one of the other video devices 902 to which the setting information is to be downloaded, the controller 1002 reads the setting information from the storage unit 1004, code-modulates the read setting information and outputs the code-modulated setting information to the transmitter 1005.

The transmitter 1005 emits the code-modulated setting information from the controller 1002 in the form of an infrared signal to transmit it to the destination video device 902.

For example, in the key input unit 1003, the 'Transmit 1' key may be set to correspond to the first video device 902 and the 'Transmit 2' key may be set to correspond to the second video device 902. Also, the 'Transmit 3' key may be set to correspond to the third video device 902 and the 'Transmit 4' key may be set to correspond to the fourth video device 902.

It will be understood here that the scope of the invention is not limited by those numerals, which are given as examples.

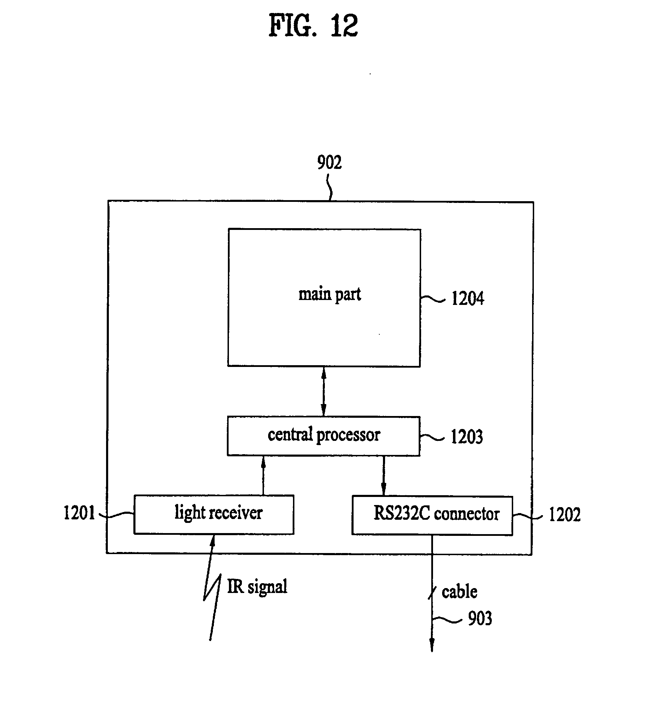

Each video device 902 includes, as shown in FIG. 12, a light receiver 1201 for receiving the code-modulated setting information from the wireless setting device 901, and a central processor 1203 connected with the light receiver 1201. The central processor 1203 acts to control the operation of the light receiver 1201 and the operation of a main part 1204. The main part 1204 is adapted to output video and audio signals under the control of the central processor 1203. Each video device 902 further includes an RS 232C connector 1202 for transmitting video and audio setting information outputted from the central processor 1203 to the wireless setting device 901.

The light receiver 1201 also receives a signal from a general remote controller (not shown) that controls the operation of the main part 1204.

The central processor 1203 controls channel, video and audio states of the main part 1204 in response to the signal for the control of the operation of the main part 1204, received through the light receiver 1201. The central processor 1203 also functions to externally transmit the video and audio setting information of the specific video device 902 set to the states desired by the user via the RS232C connector 1202.

Further, the central processor 1203 demodulates a code-modulated signal inputted through the light receiver 1201 and then determines whether the demodulated signal is the setting information inputted from the wireless setting device 901. If the demodulated signal is determined to be the setting information inputted from the wireless setting device 901, the central processor 1203 controls the channel, video and audio states of the main part 1204 at one time on the basis of the setting information. In this manner, the states of the plurality of video devices 902 can be set to the state of the specific video device 902 desired by the user.

A more detailed description will hereinafter be given of this embodiment in which channel, video and audio setting information is modulated into an infrared signal, with reference to FIGs. 13A to 13E.

As shown in FIG. 13A, the start pulse includes a leader pulse or header pulse, four 8-bit custom codes, and an ending signal bit. In the present embodiment, the custom codes are set to 0x7F, 0x5F, 0x3F and 0x1F, respectively.

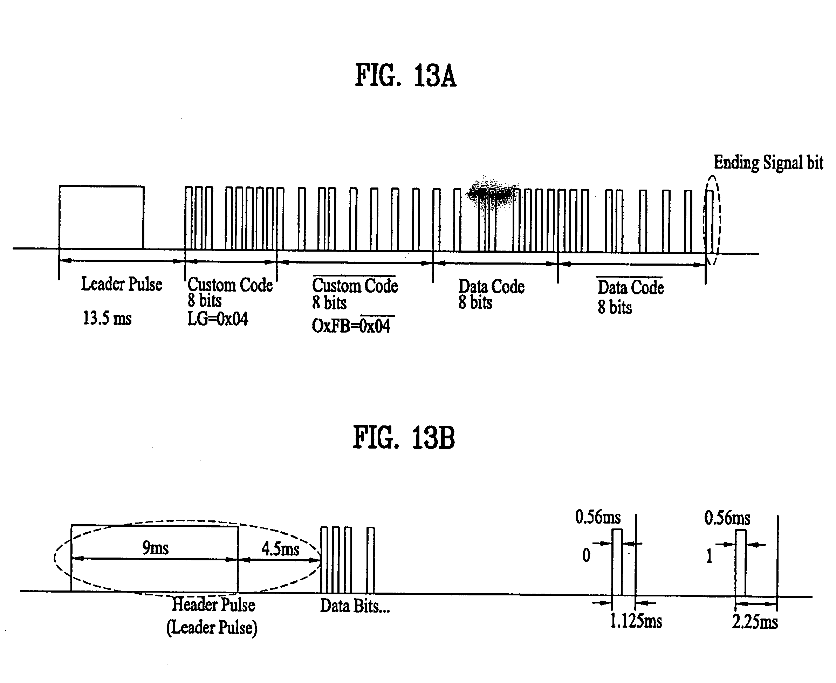

FIG. 13B is a timing diagram of the start pulse of FIG. 13A. As shown in FIG. 13B, the header pulse remains 'high' for 9ms, and 'low' for 4.5ms. For data bits, a distinction can be made between '0' and '1' on the basis of the duration of a 'low' signal subsequent to a 'high' signal.

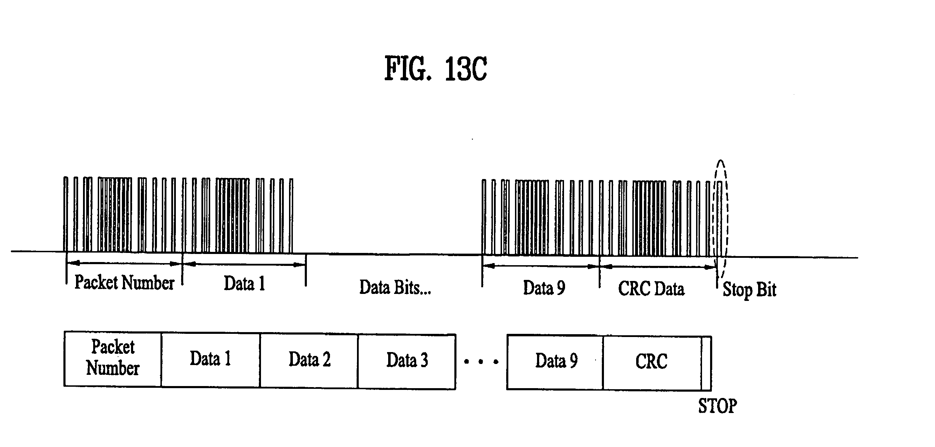

FIG. 13C is a view showing the format of a data pulse of the setting information which is transmitted from the transmitter in the wireless setting device of FIG. 10. As shown in FIG. 13C, in the present embodiment, the data pulse includes a packet number, nine data bit groups, CRC data, and a stop bit.

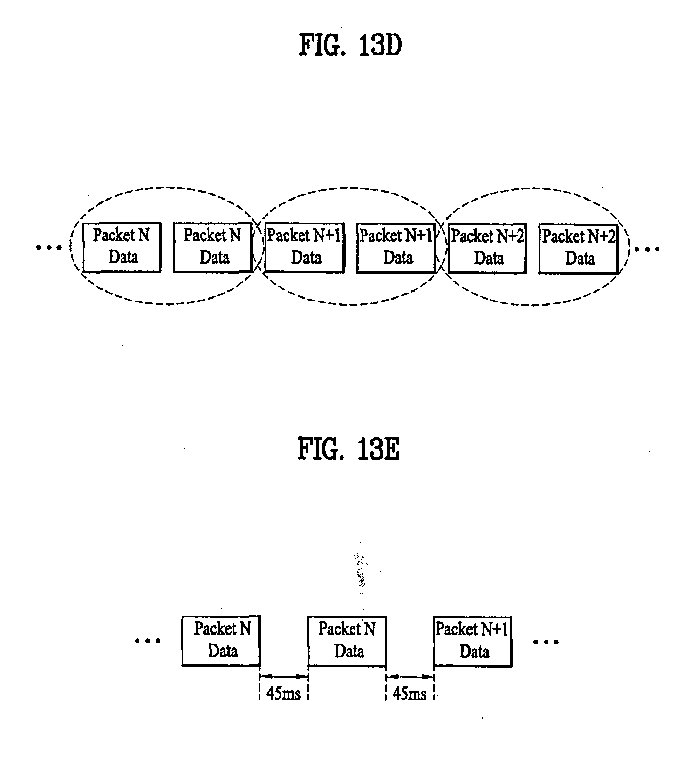

FIG. 13D is a view illustrating repetition of packet data which is transmitted from the transmitter in the wireless setting device of FIG. 10. As shown in FIG. 13D, in the present embodiment, the transmission of all packet data may be repeated two times for error prevention.

FIG. 13E is a timing diagram illustrating a time interval between the packet data which is transmitted from the transmitter in the wireless setting device of FIG. 10. As shown in FIG. 13E, the inter-packet data time internal may be, for example, 45ms.

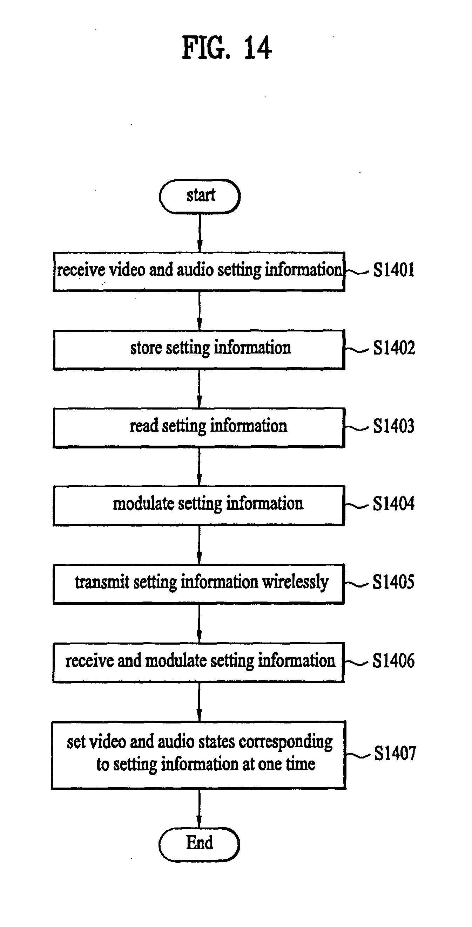

The data downloading operation of the video device according to the third embodiment of the present invention will hereinafter be described with reference to FIG. 14.

First, if all setting information of one arbitrary video device 902, including external input selection information, channel selection information, screen adjustment information and audio adjustment information, is set to desired regular states, the wireless setting device 901 receives the setting information (S1401).

The wireless setting device 901 then stores the setting information in the storage unit 1004 (S1402).

Thereafter, the wireless setting device 901 reads the stored setting information (S1403) and modulates the read information into an infrared signal (S1404).

If the modulation of the read information is completed, the wireless setting device 901 transmits the modulated setting information to one or more destination video devices 902 which require the download of the setting information (S1405).

At least one destination video device 902 receives and demodulates the modulated setting information (S1406), and sets video and audio states thereof corresponding to setting information at one time (S1407) .

As apparent from the above description, the present invention provides a video device capable of downloading data thereabout and a method for controlling the same, wherein software associated with a system of the video device is transmitted via a cable or in the form of an infrared signal, so that existing software contained in the video device can be upgraded with the transmitted software, or the transmitted software can be newly added to the video device.

Further, the software upgrade may be performed using broadcasting equipment pre-installed in a factory, without a need for separate software upgrade equipment, thereby significantly curtailing manpower and costs required for the software upgrade.

In addition, in the case where a plurality of video devices are used in a large-scale lodging house such as a hotel, or a public place such as an exhibit hall, video and audio set states of the video devices can be adjusted to regular states desired by the user at one time through the use of an infrared signal. Therefore, it is possible to download the setting information and set the plurality of video devices to the same states corresponding to the setting information, at low failure rate, at low cost and at ease.

It will be apparent to those skilled in the art that various modifications and variations can be made within the scope of the present invention.

## Claims

1. A method for controlling a plurality of video devices capable of downloading data, comprising the steps of:
transmitting a data signal containing data associated with operation of the video devices to each of the video devices;
storing the data included in the data signal in the video devices; and
automatically updating the video devices according to the stored data.

2. The method as set forth in claim 1, wherein the data associated with operation of the video devices contains at least one of system software and configuration information of the video devices.

3. The method as set forth in claim 1, wherein, the data signal is generated from another video device or from a computer and is transmitted to the video devices using wireless communication.

4. The method as set forth in claim 1, wherein, the data signal is generated from a signal device and is transmitted to the video devices using a cable.

5. The method as set forth in claim 2, further comprising determining whether the data associated with operation of the video devices is applicable to each of the video devices.

6. The method as set forth in claim 5, wherein the data associated with operation of the video devices is included in at least one transport stream (TS) packet and are compared with model information of the video devices to check the applicability.

7. The method as set forth in claim 6, wherein each transport stream (TS) packet includes:
a header containing a packet identifier (PID); and
a payload containing the data associated with operation of the video devices.

8. The method as set forth in claim 5, wherein the determining whether the data associated with operation of the video devices is applicable to each of the video devices comprises:
extracting a PID contained in the data signal;
comparing the extracted PID with model information pre-stored in each video device; and
determining whether to store the data associated with operation of the video devices in each video device, according to a result of the comparison.

9. The method as set forth in claim 8, wherein the PID is compared with the model information of each video device in order to determine whether the data included in the data signal is applicable to each video device.

10. A video device capable of downloading data, comprising:
a data receiving unit for receiving a data signal containing data associated with operation of the video device;
a memory for storing the data included in the data signal;
a controller for automatically updating the video device according to the data stored in the memory.

11. The video device as set forth in claim 10, wherein the data associated with operation of the video device contains at least one of system software and configuration information of the video device.

12. The video device as set forth in claim 10, wherein the data signal is originally generated from another video device or computer and is transmitted to the data receiving unit using wireless communication.

13. The video device as set forth in claim 10, wherein the data signal is generated from a signal device and is transmitted to the video device using a cable.

14. The video device as set forth in claim 11, wherein the controller determines whether the data included in the data signal is applicable to the video device.

15. The video device as set forth in claim 14, wherein the data associated with operation of the video device is included in at least one transport stream (TS) packet and are compared with model information of the video device to check the applicability.

16. The video device as set forth in claim 15, wherein each transport stream (TS) packet includes:
a header containing a packet identifier (PID); and
a payload containing the data associated with operation of the video device.

17. The video device as set forth in claim 14, wherein the controller extracts a PID contained in the data signal, compare the extracted PID with model information pre-stored in the video device, and determines whether to store the data included in the data signal in the memory, according to a result of the comparison.

18. The video device as set forth in claim 17, wherein the controller compares the PID with the model information of the video device in order to determine whether the data included in the data signal is applicable to the video device.

19. A video device capable of downloading data, comprising:
a data receiver for receiving an infrared data signal including system software associated with operation of the video device;
a storage unit for storing the system software included in the infrared data signal; and
a controller for executing the system software stored in the storage unit in order to upgrade the video device.

20. A method for controlling a video device capable of downloading data, comprising the steps of:
receiving an infrared data signal including system software associated with operation of the video device;
storing the system software included in the infrared data signal; and
executing the stored system software in order to upgrade the video device.

21. A system for setting-up configuration of a plurality of video devices, comprising:
a wireless configuration set-up device for receiving configuration information from a reference video device, modulating the configuration information into one or more codes, and generating a wireless data signal including the modulated codes, the configuration information containing at least one of screen adjustment information, channel selection information and audio adjustment information which are set by the reference video device; and
a plurality of video devices, each video device receiving the wireless data signal, restoring the configuration information by demodulating the modulated codes included in the wireless data signal, and automatically setting-up configuration according to the restored configuration information.

22. The system as set forth in claim 21, wherein the wireless configuration set-up device comprises:
a key input unit including a data reception key and a data transmission key;
a data receiver for receiving the configuration information from the reference video device;
a data transmitter for generating the wireless data signal including the modulated codes;
a data storage unit; and
a controller for storing the configuration information received by the data receiver in the data storage unit in response to the data reception key, and for modulating the stored configuration information into one or more codes and transmitting the modulated codes to the data transmitter in response to the data transmission key.

23. The system as set forth in claim 22, wherein the key input unit includes:
a plurality of data reception keys for storing a plurality of different configuration information sets from the reference video device, respectively; and
a plurality of data transmission keys for transmitting any one of the stored configuration information sets to plurality of video devices.

24. The system as set forth in claim 22, wherein the transmitter receives the modulated codes from the controller and generates an infrared data signal including the modulated codes.

25. The system as set forth in claim 24, wherein each video device comprises:
an infrared signal receiver for receiving the infrared data signal transmitted from the data transmitter included in the wireless configuration set-up device; and
a central processing unit for restoring the configuration information by demodulating the codes included in the infrared data signal, and automatically setting-up configuration of each video device according to the restored configuration information.

26. A method for setting-up configuration of a plurality of video devices, the method comprising the steps of:
generating a wireless data signal including configuration information received from a reference video device; and
automatically setting-up configuration of a plurality of video devices according to the configuration information included in the wireless data signal.

27. The method as set forth in claim 26, wherein the generating a wireless data signal comprises:
storing a plurality of configuration information sets received from the reference video device; and
generating a wireless data signal selectively including one of the plurality of configuration information sets.

28. A system for downloading data to a plurality of video devices, the system comprising:
a signal device for generating a broadcast signal containing system software associated with operation of the video devices;
a plurality of video devices connected to the signal device via a cable, each video device receiving the broadcast signal from the signal device, determining whether the system software is applicable, and performing a system upgrade with the system software according to a result of the determination.

29. The system as set forth in claim 28, wherein each video device includes a controller for comparing a PID contained in the broadcast signal with model information pre-stored in each video device and storing the system software contained in the broadcast signal in a memory if the PID is the same as the model information.

30. A method for downloading data to a plurality of video devices, the method comprising the steps of:
generating a broadcast signal containing system software associated with operation of the video devices;
receiving the broadcast signal via a cable by the video device if a command for system upgrade is inputted from a user; and
determining whether the system software is applicable to each video device and performing a system upgrade with the system software according to a result of the determination.

31. The method as set forth in claim 30, wherein the system software is included in at least one transport stream (TS) packet.

32. The method as set forth in claim 31, wherein each transport stream (TS) packet includes:
a header containing a packet identifier (PID); and
a payload containing the system software.

33. The method as set forth in claim 32, wherein the system software is contained in at least one of a video area, audio area and additional information area of the payload.

34. The method as set forth in claim 30, wherein the determining whether the system software is applicable to each video device comprises:
extracting a PID contained in the received broadcast signal;
comparing the extracted PID with model information pre-stored in each video device; and
determining whether to store the system software in each video device, according to a result of the comparison.

35. The method as set forth in claim 34, wherein the PID is compared with the model information of each video device in order to determine whether the system software included in the broadcast signal is applicable to each video device.
